Europäisches Patentamt

European Patent Office

Office européen des brevets

(19)

(11) Numéro de publication : **0 336 807 B1**

(12)

# FASCICULE DE BREVET EUROPEEN

(45) Date de publication du fascicule du brevet :
**18.12.91 Bulletin 91/51**

(51) Int. Cl.⁵ : **B23K 7/06, F23D 14/56**

(21) Numéro de dépôt : **89400775.6**

(22) Date de dépôt : **20.03.89**

(54) Chalumeau à gaz équipé d'un dispositif d'observation visuelle.

(30) Priorité : **21.03.88 FR 8803627**

(43) Date de publication de la demande :
**11.10.89 Bulletin 89/41**

(45) Mention de la délivrance du brevet :
**18.12.91 Bulletin 91/51**

(84) Etats contractants désignés :
**AT BE CH DE ES FR GB GR IT LI LU NL SE**

(56) Documents cités :
**GB-A- 1 421 919**
**US-A- 4 450 339**
**PATENT ABSTRACTS OF JAPAN, vol. 9, no. 92**
**(M-373)(1815), 20 avril 1985**

(73) Titulaire : **Donze, Michel**
**La Flie B. P. 51**
**F-54460 Liverdun (FR)**
Titulaire : **Donze, Bertrand**
**La Flie B. P. 51**
**F-54460 Liverdun (FR)**
Titulaire : **SOLLAC**
**Immeuble "Elysées-La Défense" 29 le Parvis**
**F-92800 Puteaux (FR)**

(72) Inventeur : **Donze, Michel**
**La Flie B.P. 51**
**F-54460 Liverdun (FR)**
Inventeur : **Donze, Bertrand**
**10, rue Louis Maury**
**F-55100 Verdun (FR)**

(74) Mandataire : **Robert, Jean-Pierre et al**
**CABINET BOETTCHER 23, rue la Boétie**
**F-75008 Paris (FR)**

## Description

L'invention concerne un chalumeau à gaz équipé d'un dispositif d'observation visuelle d'un bain de fusion produit par le chalumeau, destiné notamment à être utilisé sur les chalumeaux de décriquage.

Les semi-produits sidérurgiques tels que brames, blooms, billettes en acier, par exemple, qu'ils soient obtenus à partir d'une coulée en lingots ou d'une coulée continue, sont généralement transformés en produits plats par laminage à chaud.

Dans un souci permanent d'économiser l'énergie et de diminuer ses coûts de production, le sidérurgiste cherche à bénéficier au maximum de la chaleur du semi-produit sortant de la coulée, pour effectuer cette opération de laminage.

Cependant, les semi-produits peuvent présenter au voisinage de leurs surfaces des défauts, visibles ou non, du type fissure, crique, repli ou autre qui risquent de subsister sur les produits laminés ou même de s'amplifier et d'entraîner ainsi leur rebut, sans parler d'un éventuel endommagement de la surface des cylindres du laminoir.

C'est pourquoi, il s'avère nécessaire, avant de procéder audit laminage, d'examiner les semi-produits pour savoir s'ils peuvent être laminés directement ou s'ils doivent être préalablement traités pour supprimer ou réparer les défauts qu'ils présentent, ou encore, si leur qualité est à ce point mauvaise qu'il y a lieu de les recycler.

Jusqu'à présent, cet examen de détection des défauts, en raison du procédé utilisé et du matériel mis en oeuvre, nécessitait un refroidissement préalable du semi-produit ; ce qui allait à l'encontre du souci du sidérurgiste d'économiser l'énergie.

Il est connu d'observer un bain de métal en fusion produit notamment par un chalumeau de décriquage à partir d'une caméra vidéo indépendante de ce dernier disposée à proximité du bain afin par exemple de surveiller et contrôler la disparition des criques à la surface des lingots de métal avant leur laminage.

Lors de l'observation du bain, la caméra et le matériel accessoire sont soumis d'une part aux projections de métal en fusion au voisinage du bain et d'autre part au flux de chaleur dégagée par la flamme du chalumeau et par le bain. Les agressions de l'environnement exposent le matériel (caméra...) à des risques d'endommagements importants et rendent impossible toute visée rapprochée du bain. En outre, la fumée dégagée par la fusion du bain diminue considérablement la qualité de la prise de vue et ne permet pas de déceler les criques ou défauts de petites tailles.

Il est également connu du brevet US-4.450.339 une torche de soudure à l'arc ayant un système optique donnant une image d'une zone soudée pour permettre d'ajuster la position d'une électrode et son alimentation en courant. La torche décrite a différents inconvénients. La protection du système optique est assurée par une fenêtre en quartz, éloignée de la zone chaude, ce qui ferme l'angle de vue du système optique. De plus, cette fenêtre peut être détériorée ou salie par les projections dues à l'arc électrique, le faible débit du gaz rare utilisé pour créer une atmosphère neutre ne permettant pas de repousser lesdites projections.

L'invention a donc pour but principal l'observation d'un bain en fusion produit par un chalumeau sans aucun des inconvénients mentionnés plus haut.

A cet effet, l'invention a pour objet un chalumeau à gaz comprenant un corps ayant au moins un conduit d'arrivée d'un gaz, muni à une extrémité d'une buse ayant un orifice principal, et un dispositif optique d'observation visuelle composé d'un objectif coaxial à l'orifice principal de la buse et d'une fibre optique.

Conformément à l'invention, l'objectif est disposé à l'intérieur de la buse, en ménageant une section de passage suffisante pour le gaz et est balayé par ce dernier pendant le fonctionnement, de façon que la surface de l'orifice principal corresponde sensiblement à celle embrassée par l'angle de vue de l'objectif, la fibre optique ayant une partie extrême partant de l'objectif s'étend de manière étanche au gaz à l'extérieur du corps en direction d'un dispositif d'interprétation des informations lumineuses et un tube de guidage rigide est disposé en prolongement du conduit pour protéger et maintenir la fibre optique depuis ledit conduit jusqu'à un connecteur extérieur au corps du chalumeau.

Le balayage par un gaz du dispositif optique permet de repousser les projections qui parviennent du bain en fusion et d'assurer la propreté de l'objectif. Ce balayage permet aussi le refroidissement du dispositif, et de ce fait, un rapprochement de l'objectif vers la buse en augmentant l'angle de vue et la surface d'analyse du bain fondu.

De préférence, l'extrémité intérieure opposée du tube de guidage rigide est en communication avec une chambre d'arrivée du gaz alimentée par un conduit d'arrivée de gaz désaxé débouchant transversalement dans cette dernière.

Selon une autre caractéristique, la partie extrême du dispositif optique située à l'intérieur du conduit d'arrivée de gaz s'étend à l'intérieur d'un tube comprenant au moins des moyens de centrage du tube dans le conduit susdit et une butée d'arrêt du dispositif optique dans le tube.

D'autres caractéristiques et avantages de l'invention apparaîtront à la lecture de la description qui suit d'un mode de réalisation en liaison avec les dessins ci-joints parmi lesquels :

— la figure 1 est une vue partielle en coupe axiale d'un chalumeau à gaz équipé d'un dispositif optique d'observation visuelle selon l'invention ;

— la figure 2 est une vue partielle en coupe axiale décalée angulairement par rapport à la figure 1 de la partie avant d'un chalumeau à gaz équipé d'un dispositif optique d'observation visuelle selon l'invention ;

— la figure 3 est une section selon la ligne III-III de la figure 2.

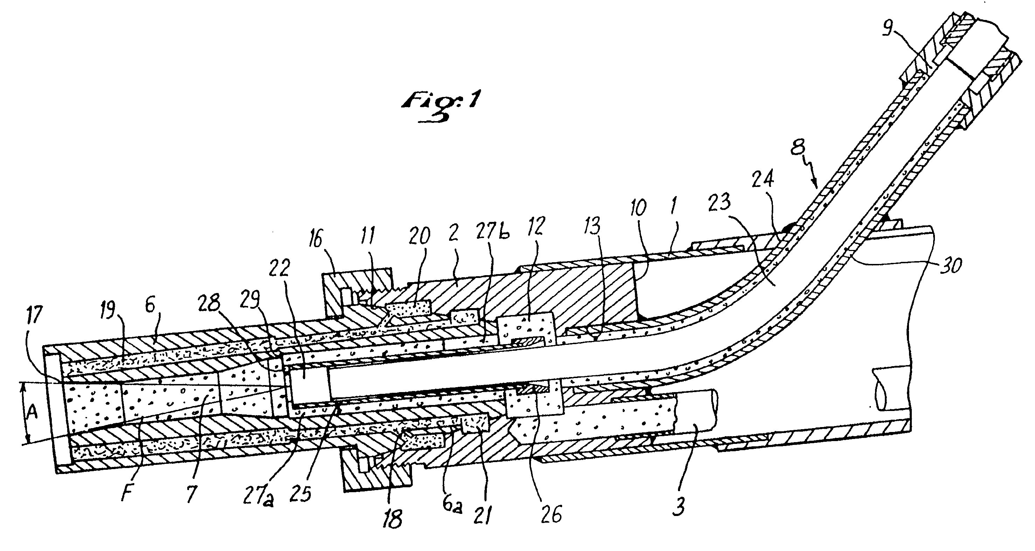

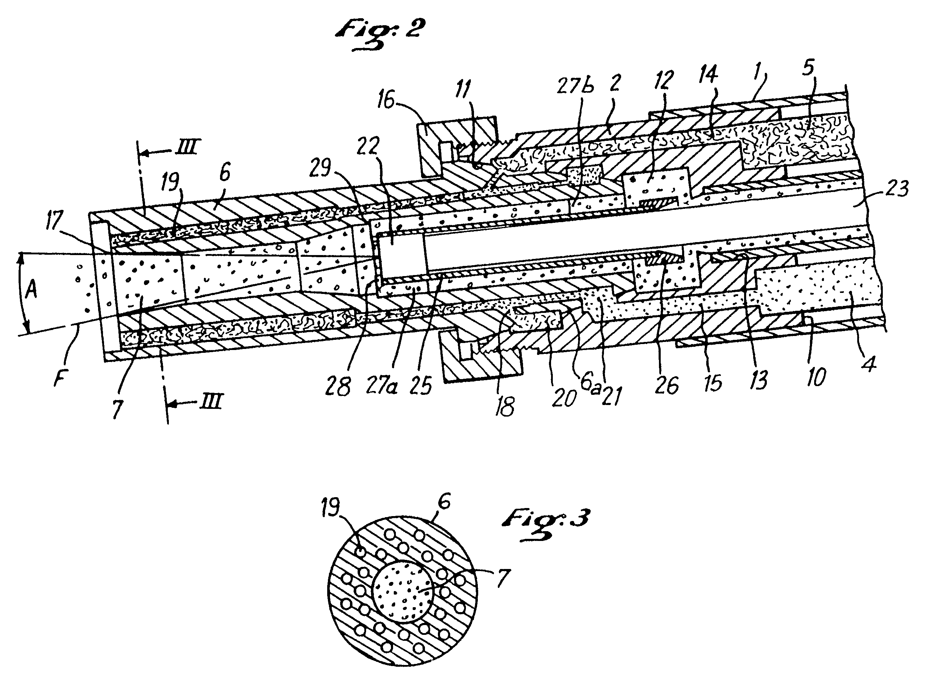

En se référant aux figures 1 et 2, on voit un chalumeau à gaz, par exemple un chalumeau de décriquage oxyacéthylénique équipé d'un dispositif optique d'observation visuelle d'un bain de combustion produit par ce dernier.

Le chalumeau comprend un corps cylindrique 1 creux, une tête de chalumeau 2 fixée de façon étanche dans la partie avant du corps (à gauche sur les figures 1, 2) à travers lesquels s'étendent deux conduits d'alimentation en oxygène 3, 4 et un conduit d'alimentation en acétylène 5. Le chalumeau comprend également une buse de décriquage 6 de forme générale cylindrique ayant un conduit central d'arrivée d'oxygène 7 relié au conduit d'alimentation en oxygène 3.

Selon l'invention le chalumeau comprend un dispositif optique d'observation visuelle 8 — qui sera décrit plus loin — dont une partie extrême s'étend coaxialement à l'intérieur du chalumeau, ce dispositif étant relié par sa partie opposée s'étendant hors du corps 1 à un récepteur, par exemple une caméra au moyen d'un connecteur 9.

La tête de chalumeau comprend, implantée dans sa partie arrière, les extrémités des trois conduits d'alimentation en gaz 3, 4, 5 disposés de façon excentrée et fixés de façon classique sur la face arrière 10 de la tête 2. Par ailleurs, ces conduits sont reliés par leurs extrémités opposées à la source de gaz correspondante.

La tête de chalumeau comprend un chambrage central 12 auquel aboutit un alésage arrière 13 qui s'ouvre sur l'avant par une portée conique 11 destinée à recevoir de manière étanche l'extrémité 6a de fixation de la buse 6. L'alésage 13 permet ainsi de recevoir et de guider une partie du dispositif optique 8 s'étendant à l'intérieur de la tête 2.

La chambre 12 est alimentée en oxygène par le conduit 3 qui peut ainsi rejoindre par un canal central de la buse 6 le conduit 7. Le conduit 7 présente une portion cylindrique à sa partie arrière (à droite sur les figures 1, 2) qui reçoit une partie du dispositif optique, et une portion ayant la forme d'un venturi à sa partie avant qui débouche en un orifice central principal 17.

Des gorges appropriées ménagées dans la portée 11 constituent des chambres annulaires, l'une 20 alimentée en acétylène par un conduit 14, 5 ; l'autre 21 alimentée en oxygène par un conduit 15, 4. Ces chambres communiquent par une pluralité de conduits d'injection 18 dans des conduits 19 assurant le mélange des gaz et leur détente pour les rendre propre à la combustion à la sortie de la buse 6.

Le chalumeau selon l'invention comprend un dispositif optique d'observation visuelle 8 composé d'un objectif 22 et d'une fibre optique 23 s'étendant coaxialement à l'intérieur du conduit d'arrivée central 7 de la buse 6, à travers l'alésage 13 débouchant sur la face arrière 10 de la tête de chalumeau pour sortir du corps par une ouverture 24 à l'opposé de la buse 6.

La partie extrême du dispositif optique comprenant l'objectif et une fraction de la longueur de la fibre 23 logée à l'intérieur du conduit central d'arrivée d'oxygène 7 est disposée dans un tube 25.

Ce tube comprend une extrémité arrière évasée 26 pour faciliter l'introduction du dispositif optique dans le tube.

En outre le tube comprend à ses deux parties extrêmes une douille 27a, 27b de centrage du tube intérieur de la partie arrière du conduit d'arrivée central d'oxygène de la buse. Les douilles 27a, 27b sont des douilles à trois ailettes permettant un bon centrage sans par ailleurs gêner le passage du gaz.

Bien entendu on peut prévoir une douille longitudinale de même type s'étendant sur la totalité de la longueur du tube 25 ou tout autre moyen approprié de centrage permettant un passage de gaz.

On remarquera que la douille située du côté de l'objectif comprend une face de butée 28 contre laquelle l'objectif 23 prend appui et que cette douille 27a s'appuie également contre un épaulement 29 ménagé à l'extrémité avant de la partie cylindrique du conduit central de la buse. Ainsi, l'objectif est disposé à une distance déterminée de l'orifice de la buse pour que les limites de son angle de vue A passent par les bords de l'orifice central principal 17 de la buse. De préférence, l'optique de l'objectif et notamment sa grande distance focale sont telles que l'angle de vue A est à peu près égal à 13°.

On notera également que lorsque l'on procède à un changement de buse, le dispositif optique est protégé par le tube et est maintenu dans une position sensiblement coaxiale au conduit central d'arrivée d'oxygène 7 si bien que la mise en place de la nouvelle buse est facilitée.

Comme il ressort des figures 1 et 2, la partie du dispositif optique disposée dans la chambre chaude de la buse est balayée par un flux d'oxygène pur et frais qui protège efficacement le dispositif optique de la chaleur ainsi que des projections de métal en fusion, le flux d'oxygène s'opposant à la pénétration de celles-ci à l'intérieur de la buse. Un tel arrangement du dispositif optique à l'intérieur du chalumeau permet l'observation d'un bain en fusion avec une visée rapprochée améliorant la qualité et l'efficacité des prises de vues si bien qu'il est possible de déceler des criques ou des défauts analogues de très petites tailles.

En arrière de la partie de la fibre optique située dans le conduit central d'arrivée d'oxygène, la fibre optique 23 s'étend en dehors du corps dans un tube de guidage 30 rigide implanté dans l'alésage 13. Ce tube 30 s'étend à partir de la tête 2 d'abord à l'intérieur du corps 1 avant de sortir de ce dernier à travers l'ouverture 24 prévue à cet effet au bord de laquelle il est brasé.

On notera que l'extrémité intérieure du tube disposé dans la partie arrière de la tête de chalumeau est en communication avec la chambre d'arrivée d'oxygène.

Enfin la figure 3 représente une section droite de la partie avant de la buse montrant la disposition des conduits d'arrivée de mélange oxyacétylènique 19 par rapport au conduit central d'arrivée d'oxygène 7 de la buse.

Bien entendu le diamètre de la partie du conduit central d'arrivée 7 recevant le dispositif optique 8 a été agrandi par rapport au diamètre d'un conduit central d'arrivée d'une buse ne contenant pas de dispositif optique afin de rétablir une section de passage de l'oxygène adapté au débit désiré.

## Revendications

1. Chalumeau à gaz comprenant un corps (1) ayant au moins, un conduit d'arrivée (7) d'un gaz, muni à une extrémité, d'une buse (6) ayant un orifice principal (17), un dispositif optique d'observation visuelle (8) composé d'un objectif (22) coaxial à l'orifice principal (17) de la buse (6) et d'une fibre optique (23), caractérisé en ce que l'objectif est disposé à l'intérieur de la buse (6), en ménageant une section de passage suffisante pour le gaz, et est balayé par ce dernier pendant le fonctionnement, de façon que la surface de l'orifice principal (17) corresponde sensiblement à celle embrassée par l'angle de vue (A) de l'objectif (22), en ce que la fibre optique (23) ayant une partie extrême partant de l'objectif (22) s'étend de manière étanche au gaz, à l'extérieur du corps (1) en direction d'un dispositif d'interprétation des informations lumineuses et en ce qu'il comprend un tube de guidage (30) rigide disposé en prolongement du conduit (7) pour protéger et maintenir la fibre optique (23) depuis ledit conduit (7) jusqu'à un connecteur (9) extérieur au corps (1) du chalumeau.

2. Chalumeau selon la revendication 1, caractérisé en ce que l'extrémité intérieure opposée du tube de guidage rigide (30) est en communication avec une chambre d'arrivée (12) de gaz, alimentée par un conduit d'arrivée de gaz (3) désaxé débouchant dans cette dernière.

3. Chalumeau selon la revendication 2, caractérisé en ce que la partie extrême (22, 23) du dispositif optique située à l'intérieur du conduit d'arrivée de gaz, (7) s'étend à l'intérieur d'un tube (25) comprenant au moins des moyens de centrage (27a, 27b) du tube (25) dans le conduit (7) susdit, et une butée d'arrêt (20) du dispositif optique (22, 23) dans le tube (25).

4. Chalumeau selon la revendication 3, caractérisé par ce que les moyens de centrage sont constitués par des ailettes fixées au tube (25).

5. Chalumeau selon l'une des revendications précédentes, caractérisé en ce que le conduit d'arrivée de gaz (7) est un conduit d'arrivée d'oxygène.

6. Chalumeau selon l'une des revendications précédentes, caractérisé en ce que l'angle (A) de vue de l'objectif (22) est sensiblement égal à 13°.

## Claims

1. A gas burner comprising a body (1) having at least one feed conduit (7) for a gas, provided at one end with a nozzle (6) having a main orifice (17), and an optical visual observation device (8) composed of an objective lens (22) which is coaxial with the main orifice (17) of the nozzle (6) and an optical fibre (23), characterised in that the objective lens is disposed in the interior of the nozzle (6), providing a sufficient flow section for the gas, and is swept by the gas during operation, in such a way that the area of the main orifice (17) substantially corresponds to that contained in the angle of sight (A) of the objective lens (22), that the optical fibre (23) which has an end portion starting from the objective lens (22) extends gastightly to the exterior of the body (1) in the direction of a device for interpreting the light information, and that it comprises a rigid guide tube (30) which is disposed in alignment with the conduit (7) to protect and hold the optical fibre (23) from said conduit (7) to a connector (9) which is external to the body (1) of the burner.

2. A burner according to claim 1 characterised in that the opposite internal end of the rigid guide tube (30) is in communication with a gas feed chamber (12) which is supplied by an off-centre gas feed conduit (3) which is into the chamber.

3. A burner according to claim 2 characterised in that the end portion (22, 23) of the optical device which is disposed within the gas feed conduit (7) extends in the interior of a tube (25) comprising at least means (27a, 27b) for centering of the tube (25) in said conduit (7), and a stop abutment (20) for the optical device (22, 23) in the tube (25).

4. A burner according to claim 3 characterised in that the centering means are formed by fins which are fixed to the tube (25).

5. A burner according to one of the preceding claims characterised in that the gas feed conduit (7) is an oxygen feed conduit.

6. A burner according to one of the preceding claims characterised in that the angle of sight (A) of the objective lens (22) is substantially equal to 13°.

## Patentansprüche

1. Gasbrenner, umfassend ein Gehäuse (1) mit wenigstens einer Zuführleitung (7) für ein Gas, die an einem Ende mit einer Düse (6) mit einer Hauptöffnung (17) versehen ist, ferner eine optische Einrichtung (8) für die visuelle Beobachtung, bestehend aus einem zu der Hauptöffnung (18) der Düse (6) koaxialen Objektiv (22) und einer Lichtleitfaser (23), dadurch **gekennzeichnet,**

— daß das Objektiv im Inneren der Düse (6) angeordnet ist, wobei es einen ausreichenden Durchtrittsquerschnitt für das Gas freiläßt, und daß es vom letzteren während des Betriebes umspült wird derart, daß die Fläche der Hauptöffnung (17) im wesentlichen der vom Sichtwinkel (A) des Objektivs (22) umfaßten Fläche entspricht,

— daß die Lichtleitfaser (23), deren einer Endabschnitt sich an das Objektiv (22) anschließt, sich in einer gegenüber dem Gas abgedichteten Weise zur Außenseite des Gehäuses (1) in Richtung einer Einrichtung zur Verarbeitung der Lichtinformationen erstreckt, und

— daß er ein starres Führungsrohr (30) umfaßt, welches in Verlängerung der Zuführleitung (7) angeordnet ist und die Lichtleitfaser (23) von der Zuführleitung (7) bis zu einem außerhalb des Gehäuses (1) des Brenners angeordneten Verbindungsstück (9) schützt und hält.

2. Brenner nach Anspruch 1, dadurch **gekennzeichnet,** daß das andere, innere Ende des starren Führungsrohres (30) mit einer Eingangskammer (12) für das Gas in Verbindung steht, die von einer außermittigen Gaszuführleitung (3) versorgt wird, welche in diese letztere mündet.

3. Brenner nach Anspruch 2, dadurch **gekennzeichnet,** daß der im Inneren der Zuführleitung (7) für das Gas angeordnete Endabschnitt (22, 23) der optischen Einrichtung ins Innere eines Rohres (25) hineinragt, welches wenigstens Mittel (27a, 27b) zum Zentrieren des Rohres (25) in der oben genannten Leitung (7) umfaßt, sowie einen vorderen Anschlag (20) für die optische Einrichtung (22, 23) im Rohr (25).

4. Brenner nach Anspruch 3, dadurch **gekennzeichnet,** daß die Mittel zum Zentrieren durch am Rohr (25) befestigte Flügel gebildet sind.

5. Brenner nach einem der vorangehenden Ansprüche, dadurch **gekennzeichnet,** daß die Zuführleitung (7) für das Gas eine Sauerstoffzuführleitung ist.

6. Brenner nach einem der vorangehenden Ansprüche, dadurch **gekennzeichnet,** daß der Sichtwinkel (A) des Objektivs (22) im wesentlichen gleich 13° ist.

Fig. 1

Fig. 2

Fig. 3